# EUROPEAN PATENT SPECIFICATION

(11) **EP 3 598 471 B1**
(45) Date of publication and mention of the grant of the patent: **19.01.2022**
(21) Application number: 18767577.2
(22) Date of filing: 14.03.2018
(51) Int. Cl.: H01H 89/00, H02B 1/04, H02B 1/18, H02B 11/26, H01H 85/02, H01H 33/02

(54) **COMBINED ELECTRIC APPARATUS HAVING CONTACTOR AND FUSE**
KOMBINIERTE ELEKTRISCHE VORRICHTUNG MIT KONTAKTOR UND SICHERUNG
APPAREIL ÉLECTRIQUE COMBINÉ AYANT UN CONTACTEUR ET UN FUSIBLE

(30) Priority: 14.03.2017 CN 201720249042 U
(43) Date of publication of application: 22.01.2020
(73) Proprietor: Siemens Aktiengesellschaft, 80333 München (DE)
(72) Inventor: HAN, Jinxin, Shanghai 201400 (CN); BAO, Zhenghong, Shanghai 201614 (CN)
(74) Representative: Patentanwaltskanzlei WILHELM & BECK
(86) International application number: PCT/CN2018/078981
(87) International publication number: WO 2018/166473

(56) References cited:
- EP-A2- 2 107 579
- CN-A- 101 162 661
- CN-U- 206 697 437
- CN-Y- 2 750 535
- CN-Y- 201 185 314
- CN-Y- 201 185 314
- DE-A1- 3 603 737
- DE-B3-102007 041 958
- DE-U1- 8 626 952
- JP-A- 2009 117 135
- US-A- 3 290 468

## Description

### Technical field

The present invention relates to a combined electric apparatus, in particular to a combined electric apparatus having a contactor and a fuse.

### Background art

In an electric power system, in order to ensure that a fuse in a combined electric apparatus is insulated from other components (such as a metal housing, a secondary circuit disposed at an upper end of the metal housing, etc.), it is often necessary for a plastic insulating cover to be additionally designed separately in order to cover the fuse, to achieve an insulating effect. When replacing or servicing the fuse, it is necessary to first remove the plastic insulating cover, causing inconvenience to the operator.

An electric apparatus according to the preamble of the independent claim is known from document DE 86 26 952 U1. Further relevant documents for the characterizing part are DE 10 2007 041958 B3, EP 2 107 579 A2, DE 3603 737 A1 and CN 206 697 437 U.

### Content of the invention

An object of the present invention is to provide a combined electric apparatus, having a contactor and a fuse, which guarantees a fuse insulation effect without any increase in the volume of the combined electric apparatus and without the internal arrangement of the combined electric apparatus being affected, and facilitates fuse replacement or servicing.

The present invention provides a combined electric apparatus having a contactor and a fuse, comprising a housing and a functional component. The housing has a wire outlet side and an operating side opposite the wire outlet side. The functional component comprises an upper wire outlet, a lower wire outlet, a contactor and a fuse. The upper wire outlet is disposed at the wire outlet side of the housing. The lower wire outlet is disposed at the wire outlet side of the housing and located below the upper wire outlet. The contactor is placed horizontally inside the housing, and the contactor has a first contact end close to the wire outlet side and a second contact end close to the operating side. The first contact end is connected to the lower wire outlet. The fuse is disposed in the housing in such a way as to be inclined relative to the contactor, and has a first connection end close to the wire outlet side and a second connection end close to the operating side; the first connection end is connected to the upper wire outlet.

With the fuse arranged in an inclined manner as described above, the first connection end of the fuse is arranged to be remote from the first contact end of the contactor, achieving a safe distance. Furthermore, the second connection end of the fuse is arranged to be remote from a top face of the housing, achieving a safe distance. Air insulation in the safe distance is used to insulate the fuse from other equipment, and a fuse insulation effect is guaranteed without any increase in the volume of the combined electric apparatus and without the internal arrangement of the combined electric apparatus being affected; moreover, the fuse can be replaced or serviced very easily due to the fact that there is no need for an insulating cover to be additionally designed to cover the fuse.

In another schematic embodiment of a combined electric apparatus having a contactor and a fuse, the combined electric apparatus further comprises an insulating member, which is disposed between the first connection end and the first contact end, in order to increase insulation protection between the fuse and the contactor.

In another schematic embodiment of a combined electric apparatus having a contactor and a fuse, the second connection end can move in linkage with the second contact end. The design described above can make the arrangement of the contactor and the fuse inside the combined electric apparatus more rational.

In another schematic embodiment of a combined electric apparatus having a contactor and a fuse, in a vertical direction, the distance between the second connection end and the top face of the housing is greater than 120 mm.

In another schematic embodiment of a combined electric apparatus having a contactor and a fuse, in the vertical direction, the distance between the second connection end and the top face of the housing is 130 mm - 140 mm.

In another schematic embodiment of a combined electric apparatus having a contactor and a fuse, the distance between the first connection end and the contactor is greater than 60 mm.

In another schematic embodiment of a combined electric apparatus having a contactor and a fuse, the combined electric apparatus comprises three functional components.

In another schematic embodiment of a combined electric apparatus having a contactor and a fuse, three fuses are arranged side by side, and three contactors are arranged side by side.

In another schematic embodiment of a combined electric apparatus having a contactor and a fuse, in each of the functional components, the upper wire outlet, the lower wire outlet, the contactor and the fuse are located in the same vertical plane; the second connection end, relative to the first connection end, is close to the contactor and remote from the top face of the housing.

Preferred embodiments are explained below in a clear and easy to understand way with reference to the accompanying drawings, to further illustrate the abovementioned characteristics, technical features, advantages and embodiments of the combined electric apparatus with the contactor and fuse.

### Description of the accompanying drawings

The drawings below merely illustrate and explain the present invention schematically, without limiting the scope thereof.
Fig. 1 is a structural schematic diagram intended to illustrate a schematic embodiment of a combined electric apparatus having a contactor and a fuse.
Fig. 2 is a structural schematic diagram intended to illustrate another schematic embodiment of a combined electric apparatus having a contactor and a fuse.

### Key to labels

- 12 -: housing
- 121 -: upper wire outlet
- 122 -: wire outlet side
- 123 -: lower wire outlet
- 124 -: operating side
- 125 -: top face
- 14 -: contactor

- 142 -: first contact end
- 144 -: second contact end
- 16 -: fuse
- 162 -: first connection end
- 164 -: second connection end
- 18 -: insulating member

### Particular embodiments

Particular embodiments of the invention are now explained with reference to the accompanying drawings, in order to furnish a clearer understanding of the technical features, object and effects of the present invention.

In this text, "schematic" means "serving as a real example, an example or an illustration". No drawing or embodiment described as "schematic" herein should be interpreted as being a more preferred or more advantageous technical solution.

To make the drawings appear uncluttered, only those parts relevant to the present invention are shown schematically in the drawings; they do not represent the actual structure thereof as a product. Furthermore, to make the drawings appear uncluttered for ease of understanding, in the case of components having the same structure or function in the drawings, only one of these is drawn schematically, or only one is marked.

In this text, "first" and "second" etc. are merely used to differentiate between parts, not to indicate their order and degree of importance, etc.

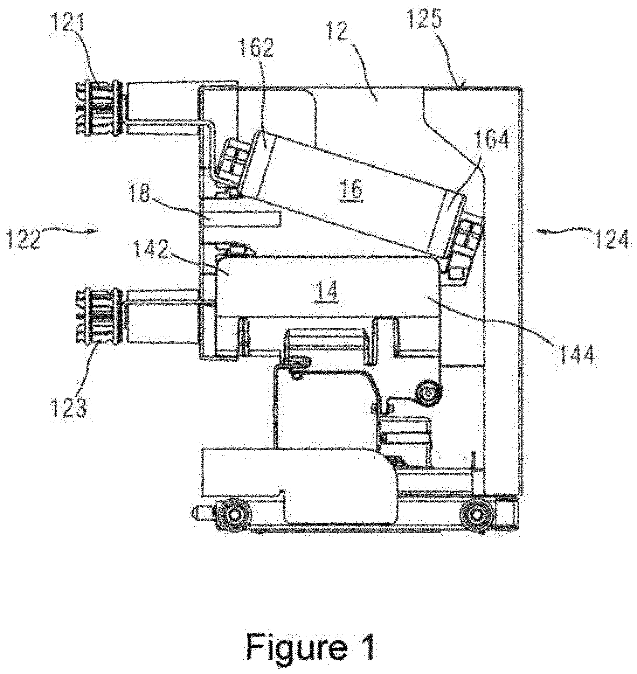

Fig. 1 is a structural schematic diagram intended to illustrate a schematic embodiment of a combined electric apparatus having a contactor and a fuse. The combined electric apparatus shown in fig. 1 is a single-phase combined electric apparatus having a contactor and a fuse; as shown in the figure, the single-phase combined electric apparatus with the contactor and fuse comprises a housing 12 and a functional component. The housing 12 has a wire outlet side 122 and an operating side 124 opposite the wire outlet side 122. The wire outlet side 122 is a side at which the combined electric apparatus is connected to a switch cabinet; the operating side 124 is a side at which an operator operates the combined electric apparatus. The functional component comprises an upper wire outlet 121, a lower wire outlet 123, a contactor 14 and a fuse 16.

The upper wire outlet 121 is disposed at the wire outlet side 122 of the housing 12; the lower wire outlet 123 is also disposed at the wire outlet side 122 of the housing 12 and located below the upper wire outlet 121.

The contactor 14 is placed horizontally inside the housing 12, and the contactor 14 has a first contact end 142 close to the wire outlet side 122 and a second contact end 144 close to the operating side 124; the first contact end 142 is connected to the lower wire outlet 123.

The fuse is disposed in the housing 12 in such a way as to be inclined relative to the contactor 14; the fuse 16 has a first connection end 162 close to the wire outlet side 122, and a second connection end 164 close to the operating side 124; the first connection end 162 is connected to the upper wire outlet 121. Here, "inclined" means at an angle, not parallel, to a horizontal plane.

With the fuse 16 arranged in an inclined manner as described above, the second connection end 164, relative to the first connection end 162, is close to the contactor 14 and remote from a top face 125 of the housing 12 in a vertical direction. The first connection end 162 of the fuse 16 is arranged to be remote from the first contact end 142 of the contactor 14, achieving a safe distance. Furthermore, the second connection end 162 of the fuse 16 is arranged to be remote from the top face 125 of the housing, i.e. remote from associated components such as a metal casing and a secondary circuit, achieving a safe distance. Air insulation in the safe distance is used to insulate the fuse from other equipment, and a fuse insulation effect is guaranteed without any increase in the volume of the combined electric apparatus and without the internal arrangement of the combined electric apparatus being affected; moreover, the fuse 16 can be replaced or serviced very easily due to the fact that there is no need for an insulating cover to be additionally designed to cover the fuse 16.

In a schematic embodiment of a combined electric apparatus having a contactor and a fuse, in the vertical direction, the distance between the second connection end 164 and the top face 125 of the housing 12 is greater than 120 mm, preferably 130 mm - 140 mm. The distance between the first connection end 162 and the contactor 14 is greater than 60 mm.

In the embodiment of the combined electric apparatus having a contactor and a fuse shown in fig. 1, the combined electric apparatus further comprises an insulating member 18; the insulating member 18 is disposed between the first connection end 162 and the first contact end 142. This increases insulation protection between the fuse 16 and the contactor 14. Any known insulating component may be used for the insulating member.

In the embodiment of the combined electric apparatus having a contactor and a fuse shown in fig. 1, the second connection end 164 of the fuse 16 can move in linkage with the second contact end 144 of the contactor 14. For instance, after an overcurrent occurs in the fuse and a blowout occurs, a striking pin thereof will strike outward from the second connection end 164 of the fuse 16; the movement of the striking pin can be transmitted to the second contact end 144 of the contactor mechanically, and the second contact end 144 can transmit a blowout signal to the contactor, causing the contactor 14 to perform an opening operation. The design described above can make the arrangement of the contactor and the fuse inside the combined electric apparatus more rational. Of course, depending on the design requirements, a linked-movement position of the fuse 16 and the contactor 14 could also be at another end.

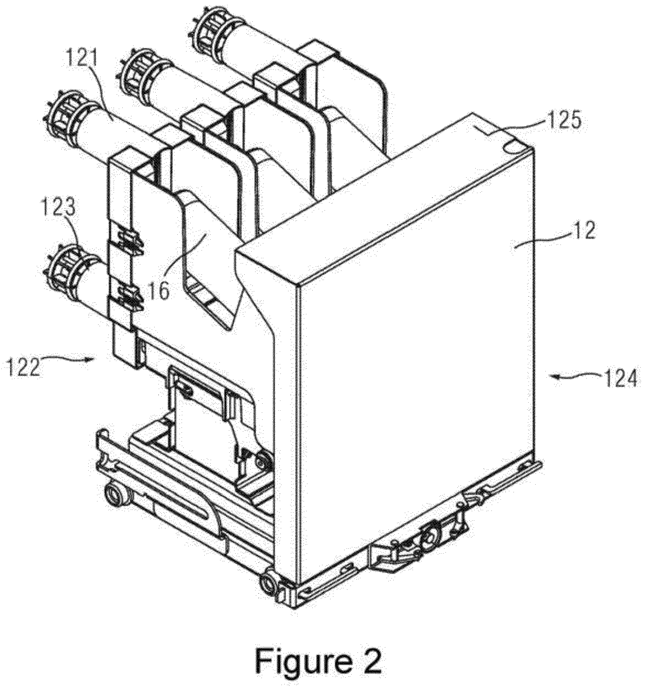

Although the combined electric apparatus having a contactor and a fuse shown in fig. 1 has a single-phase structure, the design may also be applied in a three-phase structure; as shown in fig. 2, the combined electric apparatus may comprise three of the functional component described above. Three-phase fuses 16 (only one is labelled in the figure) are arranged side by side, and three-phase contactors (not labelled in the figure) are arranged side by side.

In the embodiment shown in fig. 2, in each of the functional components, the upper wire outlet 121, the lower wire outlet 123, the contactor 14 and the fuse 16 are located in the same vertical plane; the second connection end 164, relative to the first connection end 162, is close to the contactor 14 and remote from the top face 125 of the housing 12.

The series of detailed explanations set out above are merely specific explanations of feasible embodiments of the present invention, and are not intended to limit the scope of protection of the present invention. All equivalent embodiments or changes, such as feature combinations, divisions or repetitions, which are made without departing from the artistic spirit of the present invention, should be included in the scope of protection of the present invention.

## Claims

1. A combined electric apparatus having a contactor and a fuse, **characterized by** comprising:
a housing (12), having a wire outlet side (122) and an operating side (124) opposite the wire outlet side (122); and
a functional component, comprising:
an upper wire outlet (121), disposed at the wire outlet side (122);
a lower wire outlet (123), disposed at the wire outlet side (122), and located below the upper wire outlet (121);
a contactor (14) and a fuse (16), **characterized in that** the contactor (14) is placed horizontally inside the housing (12), and having a first contact end (142) close to the wire outlet side (122) and a second contact end (144) close to the operating side (124), with the first contact end (142) being connected to the lower wire outlet (123);
the fuse (16) is disposed in the housing (12) in such a way as to be inclined relative to the contactor (14), and having a first connection end (162) close to the wire outlet side (122) and a second connection end (164) close to the operating side (124), with the first connection end (162) being connected to the upper wire outlet (121); and
wherein the combined electric apparatus has three said functional components,
wherein the three fuses are arranged side by side, and the three contactors are arranged side by side.

2. The combined electric apparatus as claimed in claim 1, **characterized by** further comprising an insulating member (18) disposed between the first connection end (162) and the first contact end (142).

3. The combined electric apparatus as claimed in claim 1, **characterized in that** the second connection end (164) can move in linkage with the second contact end (144).

4. The combined electric apparatus as claimed in claim 1, **characterized in that** in a vertical direction, the distance between the second connection end (164) and a top face (125) of the housing (12) is greater than 120 mm to achieve the inclined arrangement of said fuse (16) relative to said contactor (14) and to provide a safe distance.

5. The combined electric apparatus as claimed in claim 4, **characterized in that** in the vertical direction, the distance between the second connection end (164) and the top face (125) of the housing (12) is 130 mm - 140 mm to achieve the inclined arrangement of said fuse (16) relative to said contactor (14) and to provide a safe distance.

6. The combined electric apparatus as claimed in claim 1, **characterized in that** in a vertical direction, the distance between the first connection end (162) and the first contact end (142) is greater than 60 mm to achieve the inclined arrangement of said fuse (16) relative to said contactor (14) and to provide a safe distance.

7. The combined electric apparatus as claimed in claim 1, **characterized in that** in each of the functional components, the upper wire outlet (121), the lower wire outlet (123), the contactor (14) and the fuse (16) are located in the same vertical plane; the second connection end (164), relative to the first connection end (162), is close to the contactor (14) and remote from a top face (125) of the housing (12).

## Patentansprüche

1. Kombinierte elektrische Vorrichtung mit einem Kontaktor und einer Sicherung, **gekennzeichnet durch** Umfassen:
eines Gehäuses (12), das eine Drahtauslassseite (122) und eine der Drahtauslassseite (122) gegenüberliegende Bedienungsseite (124) aufweist; und
eine Funktionskomponente, umfassend:
einen oberen Drahtauslass (121), der an der Drahtauslassseite (122) angeordnet ist;
einen unteren Drahtauslass (123), der an der Drahtauslassseite (122) angeordnet ist und sich unterhalb des oberen Drahtauslasses (121) befindet;
einen Kontaktor (14) und eine Sicherung (16), **dadurch gekennzeichnet, dass** der Kontaktor (14) horizontal innerhalb des Gehäuses (12) angeordnet ist und ein erstes Kontaktende (142) nahe der Drahtauslassseite (122) und ein zweites Kontaktende (144) nahe der Bedienungsseite (124) aufweist, wobei das erste Kontaktende (142) mit dem unteren Drahtauslass (123) verbunden ist;
die Sicherung (16) im Gehäuse (12) relativ zum Kontaktor (14) geneigt angeordnet ist und ein erstes Anschlussende (162) nahe der Drahtauslassseite (122) und ein zweites Anschlussende (164) nahe der Bedienungsseite (124) aufweist, wobei das erste Anschlussende (162) mit dem oberen Drahtauslass (121) verbunden ist; und
wobei die kombinierte elektrische Vorrichtung drei der genannten Funktionskomponenten aufweist,
wobei die drei Sicherungen nebeneinander angeordnet sind und die drei Kontaktoren nebeneinander angeordnet sind.

2. Kombinierte elektrische Vorrichtung gemäß Anspruch 1, **gekennzeichnet durch** ferner Umfassen eines Isolierelements (18), das zwischen dem ersten Anschlussende (162) und dem ersten Kontaktende (142) angeordnet ist.

3. Kombinierte elektrische Vorrichtung gemäß Anspruch 1, **dadurch gekennzeichnet, dass** sich das zweite Anschlussende (164) in Verbindung mit dem zweiten Kontaktende (144) bewegen kann.

4. Kombinierte elektrische Vorrichtung gemäß Anspruch 1, **dadurch gekennzeichnet, dass** in vertikaler Richtung der Abstand zwischen dem zweiten Anschlussende (164) und einer Oberseite (125) des Gehäuses (12) größer als 120 mm ist, um die geneigte Anordnung der Sicherung (16) relativ zum Kontaktor (14) zu erreichen und einen Sicherheitsabstand bereitzustellen.

5. Kombinierte elektrische Vorrichtung gemäß Anspruch 4, **dadurch gekennzeichnet, dass** in vertikaler Richtung der Abstand zwischen dem zweiten Anschlussende (164) und der Oberseite (125) des Gehäuses (12) 130 mm - 140 mm beträgt, um die geneigte Anordnung der Sicherung (16) relativ zum Kontaktor (14) zu erreichen und einen Sicherheitsabstand bereitzustellen.

6. Kombinierte elektrische Vorrichtung gemäß Anspruch 1, **dadurch gekennzeichnet, dass** in vertikaler Richtung der Abstand zwischen dem ersten Anschlussende (162) und dem ersten Kontaktende (142) größer als 60 mm ist, um die geneigte Anordnung der Sicherung (16) relativ zum Kontaktor (14) zu erreichen und einen Sicherheitsabstand bereitzustellen.

7. Kombinierte elektrische Vorrichtung gemäß Anspruch 1, **dadurch gekennzeichnet, dass** in jeder der Funktionskomponenten der obere Drahtauslass (121), der untere Drahtauslass (123), der Kontaktor (14) und die Sicherung (16) in derselben vertikalen Ebene angeordnet sind; das zweite Anschlussende (164) relativ zum ersten Anschlussende (162) nahe am Kontaktor (14) und fern von einer Oberseite (125) des Gehäuses (12) liegt.

## Revendications

1. Appareil électrique combiné ayant un contacteur et un fusible, **caractérisé en ce qu'**il comprend :
un boîtier (12), ayant un côté de sortie de fil (122) et un côté de fonctionnement (124) opposé au côté de sortie de fil (122) ; et
un composant fonctionnel, comprenant :
une sortie de fil supérieure (121), disposée au niveau du côté de sortie de fil (122) ;
une sortie de fil inférieure (123), disposée au niveau du côté de sortie de fil (122), et située en dessous de la sortie de fil supérieure (121) ;
un contacteur (14) et un fusible (16), **caractérisé en ce que** le contacteur (14) est placé horizontalement à l'intérieur du boîtier (12), et ayant une première extrémité de contact (142) près du côté de sortie de fil (122) et une deuxième extrémité de contact (144) près du côté de fonctionnement (124), la première extrémité de contact (142) étant reliée à la sortie de fil inférieure (123) ;
le fusible (16) est disposé dans le boîtier (12) de manière à être incliné par rapport au contacteur (14), et ayant une première extrémité de liaison (162) près du côté de sortie de fil (122) et une deuxième extrémité de liaison (164) près du côté de fonctionnement (124), la première extrémité de liaison (162) étant reliée à la sortie de fil supérieure (121) ; et
dans lequel l'appareil électrique combiné a trois dits composants fonctionnels,
dans lequel les trois fusibles sont agencés côte à côte, et
les trois contacteurs sont agencés côte à côte.

2. Appareil électrique combiné selon la revendication 1, **caractérisé en ce qu'**il comprend en outre un élément isolant (18) disposé entre la première extrémité de liaison (162) et la première extrémité de contact (142).

3. Appareil électrique combiné selon la revendication 1, **caractérisé en ce que** la deuxième extrémité de liaison (164) peut se déplacer en liaison avec la deuxième extrémité de contact (144).

4. Appareil électrique combiné selon la revendication 1, **caractérisé en ce que** dans une direction verticale, la distance entre la deuxième extrémité de liaison (164) et une face supérieure (125) du boîtier (12) est supérieure à 120 mm pour atteindre l'agencement incliné dudit fusible (16) par rapport audit contacteur (14) et pour fournir une distance sécurisée.

5. Appareil électrique combiné selon la revendication 4, **caractérisé en ce que** dans la direction verticale, la distance entre la deuxième extrémité de liaison (164) et la face supérieure (125) du boîtier (12) est de 130 mm à 140 mm pour atteindre l'agencement incliné dudit fusible (16) par rapport audit contacteur (14) et pour fournir une distance sécurisée.

6. Appareil électrique combiné selon la revendication 1, **caractérisé en ce que** dans une direction verticale, la distance entre la première extrémité de liaison (162) et la première extrémité de contact (142) est supérieure à 60 mm pour atteindre l'agencement incliné dudit fusible (16) par rapport audit contacteur (14) et pour fournir une distance sécurisée.

7. Appareil électrique combiné selon la revendication 1, **caractérisé en ce que** dans chacun des composants fonctionnels, la sortie de fil supérieure (121), la sortie de fil inférieure (123), le contacteur (14) et le fusible (16) sont situés dans le même plan vertical ; la deuxième extrémité de liaison (164), par rapport à la première extrémité de liaison (162), est près du contacteur (14) et éloignée d'une face supérieure (125) du boîtier (12).
